# EUROPEAN PATENT APPLICATION

(11) **EP 4 488 809 A1**
(43) Date of publication of application: **08.01.2025**
(21) Application number: 23183312.0
(22) Date of filing: 04.07.2023
(51) Int. Cl.: G06F 3/041, G06F 3/01, G06F 3/044

(54) **CALIBRATION OF A CAPACITIVE SENSING DEVICE**

(71) Applicant: Aito BV, 1043 EJ Amsterdam (NL)
(72) Inventor: Keski-Jaskari, Turo, 04370 Tuusula (FI)
(74) Representative: Papula Oy

(57) **Abstract**

It is an object to provide a device for calibrating a capacitive sensing unit. According to an embodiment, a calibration unit is configured to evaluate a piezoelectric signal, measure a capacitive coupling using a capacitive sensor; and calibrate the capacitive sensor based on the piezoelectric signal and the measured capacitive coupling.

## Description

### TECHNICAL FIELD

The present disclosure relates to a capacitive sensing device. Some embodiments relate to the calibration of such capacitive sensing device using at least one piezoelectric sensor.

### BACKGROUND

An array of capacitive sensors associated with a touch surface can be used for detecting a touch on the touch surface. Some capacitive sensing methods periodically perform a scan of the capacitive sensor array to detect and localize an object on the touch surface.

These capacitive sensing methods suffer from a tradeoff between idle power consumption (e.g., power consumption in the absence of an object) and responsiveness. If the scanning frequency is high, the idle power consumption is high. If the scanning frequency is lower, the responsiveness of the device is low as it might take a long time to detect an object.

Moreover, capacitive sensors are sensitive to their electromagnetic environment. Anything conductive (e.g., metal, water, air) around a capacitive sensor might affect the measurements. Even the conductivity of air, in practice mostly the moisture level of air, may affect the measurements.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

It is an object to provide a device for touch sensing. The foregoing and other objects are achieved by the features of the independent claims. Further implementation forms are apparent from the dependent claims, the description and the figures.

According to a first aspect, a device, comprises a touch surface, at least one capacitive sensor capacitively coupled to the touch surface, at least one piezoelectric sensor mechanically coupled to the touch surface, and a calibration unit. The piezoelectric sensor is configured to convert a force applied to the piezoelectric sensor via the touch surface into a piezoelectric signal. The calibration unit is electrically coupled to the at least one piezoelectric sensor and to the at least one capacitive sensor, wherein the calibration unit is configured to: evaluate the piezoelectric signal; measure a capacitive coupling using the at least one capacitive sensor; and calibrate the at least one capacitive sensor based on the piezoelectric signal and the measured capacitive coupling.

In some implementation forms of the first aspect, the calibration unit is configured to: in response to determining that the piezoelectric signal is below a detection threshold, determining a baseline capacitive coupling for the at least one capacitive sensor based on the measured capacitive coupling.

In some implementation forms of the first aspect, the device comprises a capacitive sensing unit electrically coupled to the at least one capacitive sensor, wherein the capacitive sensing unit is configured to: acquire a measurement of the capacitive coupling using the at least one capacitive sensor; and compare the measurement of the capacitive coupling with the baseline capacitive coupling for the at least one capacitive sensor.

In some implementation forms of the first aspect, the capacitive sensing unit is configured to: determine a differential capacitive coupling for the at least one capacitive sensor, wherein the differential capacitive coupling is based on a difference between the acquired measurement of the capacitive coupling and the baseline capacitive coupling; and detect an object on the surface based on the differential capacitive coupling for the at least one capacitive sensor.

In some implementation forms of the first aspect, the device further comprises a haptic unit configured to apply a driving voltage to the at least one piezoelectric sensor. The at least one piezoelectric sensor is further configured to provide a haptic effect to the first side of the surface based on the driving voltage. The calibration unit is configured to: measure the capacitive coupling for the at least one capacitive sensor while the driving voltage is applied to the at least one piezoelectric sensor; and determining the baseline capacitive coupling for the at least one capacitive sensor based on the capacitive coupling measured for the at least one capacitive sensor while the driving voltage is applied to the at least one piezoelectric sensor.

In some implementation forms of the first aspect, the device further comprises a touch detection unit configured to: obtain at least one piezoelectric signal from the at least one piezoelectric sensor; in response to determining that the at least one piezoelectric signal fulfils a preconfigured detection condition, providing a wakeup signal to the capacitive sensing unit. The capacitive sensing unit is configured to: in response to receiving the wakeup signal while being in a standby mode, switch to an active mode; and when in the active mode, acquire the measurements from the at least one capacitive sensor.

In some implementation forms of the first aspect, the touch detection unit is configured to: determine a vibration component of the at least one piezoelectric signal; in response to determining that the vibration component of the piezoelectric signal is above a vibration component threshold, determine that the at least one piezoelectric signal fulfils the preconfigured condition.

In some implementation forms of the first aspect, the touch detection unit is further configured to determine the vibrational component by filtering the received piezoelectric signal in a predefined frequency range.

In some implementation forms of the first aspect, the device further comprises an impulse detection unit configured to: obtain the piezoelectric signal from the at least one piezoelectric sensor; determine an impulse component of the piezoelectric signal; and in response to determining that the impulse component of the piezoelectric signal is above an impulse component threshold, providing a tracking instruction to the capacitive sensing unit. The capacitive sensing unit is configured to: in response to receiving the tracking instruction, track the position of the object on the surface using the at least one capacitive sensor.

In some implementation forms of the first aspect, the impulse detection unit is further configured to determine the impulse component by summing samples of the piezoelectric signal over time.

According to a second aspect, a method comprises: evaluating a piezoelectric signal from at least one piezoelectric sensor mechanically coupled to a touch surface, the piezoelectric sensor being configured to convert a force applied to the piezoelectric sensor via the touch surface into the piezoelectric signal; measuring a capacitive coupling using at least one capacitive sensor capacitively coupled to the touch surface; and calibrating the at least one capacitive sensor based on the piezoelectric signal and the measured capacitive coupling.

In some implementation forms of the second aspect, the method further comprises: in response to determining that the piezoelectric signal is below a detection threshold, determining a baseline capacitive coupling for the at least one capacitive sensor based on the measured capacitive coupling.

In some implementation forms of the second aspect, the method further comprises: acquire a measurement of the capacitive coupling using the at least one capacitive sensor; and compare the measurement of the capacitive coupling with the baseline capacitive coupling for the at least one capacitive sensor.

In some implementation forms of the second aspect, the method further comprises: determine a differential capacitive coupling for the at least one capacitive sensor, wherein the differential capacitive coupling is based on a difference between the acquired measurement of the capacitive coupling and the baseline capacitive coupling; and detect an object on the surface based on the differential capacitive coupling for the at least one capacitive sensor.

According to a third aspect, a computer program product comprising program code configured to perform the method according to any implementation form of the second aspect, when the computer program is executed on a computing device.

It is to be understood that the implementation forms of the aspects described above may be used in combination with each other. Several of the implementation forms may be combined together to form a further implementation form.

Many of the attendant features will be more readily appreciated as they become better understood by reference to the following detailed description considered in connection with the accompanying drawings.

### DESCRIPTION OF THE DRAWINGS

In the following, example embodiments are described in more detail with reference to the attached figures and drawings, in which:
FIG. 1 illustrates a schematic representation of a device according to an embodiment.
FIG. 2 illustrates a schematic representation of a device according to an embodiment.
FIG. 3 illustrates a flow chart representation of a method according to an embodiment.
FIG. 4 illustrates a flow chart representation of a method according to an embodiment.
FIG. 5 illustrates a flow chart representation of a method according to an embodiment.
FIG. 6 illustrates a flow chart representation of a method according to an embodiment.
FIG. 7 illustrates a schematic representation of an electronic computing device according to an embodiment.

In the following, like reference numerals are used to designate like parts in the accompanying drawings.

### DETAILED DESCRIPTION

In the following description, reference is made to the accompanying drawings, which form part of the disclosure, and in which are shown, by way of illustration, specific aspects in which the present disclosure may be placed. It is understood that other aspects may be utilised, and structural or logical changes may be made without departing from the scope of the present disclosure. The following detailed description, therefore, is not to be taken in a limiting sense, as the scope of the present disclosure is defined be the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. On the other hand, for example, if a specific apparatus is described based on functional units, a corresponding method may include a step performing the described functionality, even if such step is not explicitly described or illustrated in the figures. Further, it is understood that the features of the various example aspects described herein may be combined with each other, unless specifically noted otherwise.

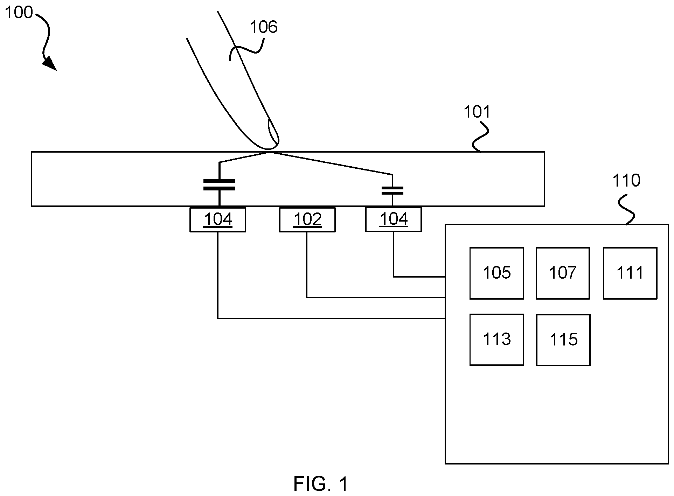

FIG. 1 illustrates a schematic representation of a device 100 according to an embodiment.

According to an embodiment, the device 100 comprises a touch surface 101, a plurality of piezoelectric sensors 102, and a plurality of capacitive sensors 104. The plurality of capacitive sensors 104 may form a capacitive sensor array.

The plurality of piezoelectric sensors 102 are mechanically coupled to the touch surface 101. Each piezoelectric sensor in the plurality of piezoelectric sensor 102 may be configured to convert a force applied to the piezoelectric sensor via the touch surface 101 into an electrical signal (hereinafter called "piezoelectric signal"). The electric signal can be representative of an electric charge, which can be detected as a voltage change. A piezoelectric sensor may also be referred to as a piezoelectric element, a piezoelectric transducer, or similar.

The touch surface 101 may also be referred to as a layer, a surface layer, a touch interface surface, or a touch interface layer. The touch surface 101 may be part of a touch user interface. The touch surface 101 may be, for example, a part of a trackpad or a key/button of a laptop computer or a touch screen.

The touch surface 101 may comprise a first side and a second side. The first side may be at least partially unobstructed. A user may touch the first side with an object 106, such as a finger. The object 106 may be, for example, a finger of a user, any other body part of a human, a stylus pen, or some other object held by a user. In the case that the object 106 is a finger, the user may be wearing gloves, and only the fabric of the glove may be in direct contact with the touch surface 101.

The plurality of piezoelectric sensors 102 may be arranged onto the second side of the touch surface 101. The plurality of piezoelectric sensors 102 may be next to the second side, in a close proximity to the second side or situated at a distance from the second side.

Each piezoelectric sensor in the plurality of piezoelectric sensors 102 may be configured to convert a mechanical stress in the piezoelectric sensor induced by a force exerted onto the first side of the touch surface 101 by an object 106 into a voltage. The mechanical stress may also be referred to as stress. The voltage may be referred to as electrical voltage, a stress induced voltage, or similar. The voltage may be proportional to the mechanical stress.

Each piezoelectric sensor may comprise piezoelectric material. The piezoelectric material may convert the force/stress applied to the piezoelectric sensors to an electric charge accumulation in the material via the piezoelectric effect, which can be detected as a voltage over the piezoelectric material. This may also be referred to as piezoelectricity.

The voltage induced over a piezoelectric sensor in the plurality of piezoelectric sensors 102 may be proportional to the rate of change of the force/pressure applied by the object 106 to the touch surface 101.

Each piezoelectric sensor in the plurality of piezoelectric sensors 102 may also be configured to convert a voltage applied over the piezoelectric sensor into a mechanical stress via the piezoelectric effect. Thus, when a driving voltage is applied over a piezoelectric sensor, a haptic effect may be induced into the touch surface 101.

Herein, two elements being mechanically coupled may indicate that there is a mechanical connection between the two elements. The two elements may be, for example, in contact with each other or the mechanical connection may be implemented via other elements. For example, each piezoelectric sensor in the plurality of piezoelectric sensors 102 may be in contact with the touch surface 101 or there may be one or more other elements between the piezoelectric sensor and the touch surface 101. Thus, when a force is applied to the touch surface 101 by an object 106 touching the touch surface 101, the force may be transferred to the piezoelectric sensors 102.

The plurality of capacitive sensors 104 are capacitively coupled (or couplable) to the touch surface 101. Each capacitive sensor 104 may be configured to detect and measure a capacitive coupling in an associated sensing region of the touch surface 101. The capacitive coupling changes with the proximity of the object 106 and thus may be used as an indicator of the presence of the object 106. A capacitive sensor may also be referred to as a capacitance element, a capacitance transducer, or similar.

The capacitive sensors 104 may use self-capacitance sensing methods based on changes in the capacitive coupling between each capacitive sensor 104 and an object 106. The object 106 near the capacitive sensor 104 may load the capacitive sensors 104 or increases the parasitic capacitance to ground, thus changing the measured capacitive coupling.

The capacitive sensors 104 may use mutual capacitance sensing methods based on changes in the capacitive coupling between transmitter electrodes and receiver electrodes. A capacitive sensor 104 may be formed between each pair of transmitter electrode and receiver electrode. An object 106 near the capacitive sensor 104 may alter the mutual coupling between the associated transmitter electrode and the receiver electrode, thus changing the measured capacitive coupling.

The device 100 further comprise a control unit 110 electrically coupled to (at least some of) the plurality of piezoelectric sensors 102, and (at least some of) the plurality of capacitive sensors 104.

The control unit 110 may comprise a capacitive sensing unit 105. The capacitive sensing unit 105 may be configured to detect and/or locate the object 106 on the touch surface. To that end, capacitive sensing unit 105 may use data received from at least some of the capacitive sensors 104.

The capacitive sensing unit 105 may comprise any electrical/electronic circuit configured to implement the functionality disclosed herein. The capacitive sensing unit 105 does not need to be implemented as a separate unit/module/device. Rather, the capacitive sensing unit 105 may refer to any section of the device 100 that is configured to implement the functionality disclosed herein.

In an active mode, the capacitive sensing unit 105 acquires measurements from at least one capacitive sensor 104. To that end, a drive signal may be applied to a transmitter electrode, and a resulting signal representative of a capacitive coupling is measured with a receiver electrode. The transmitter and receiver electrodes may either be the same physical electrode or separate physical electrodes. The resulting signal may be altered by, among other things, the proximity of a human finger with the electrode(s). This alteration may be called "changing the capacitive coupling".

Driving the transmitter electrodes consumes power. When in active mode, capacitive sensing thus always consumes power, even when just waiting for a finger to come within range. The power consumption of the capacitive sensing unit 105 in the absence of an object may be called "idle" power consumption.

In a standby mode, the capacitive sensing unit 105 does not acquire measurements from the capacitive sensor 104. In particular, in standby mode, the capacitive sensing unit 105 does not drive the transmitter electrodes. In standby mode, the capacitive sensing unit thus consumes less or no power. However, in standby mode, the capacitive sensing unit 105 is not able to detect an object.

Some capacitive sensing methods periodically perform a scan of the capacitive sensor array to detect and localize an object on the touch surface. These capacitive sensing methods suffer from a tradeoff between idle power consumption and responsiveness. If the scanning frequency is high, the idle power consumption is high. If the scanning frequency is low, the responsiveness of the device is low as it might take a long time to detect an object.

The control unit 110 may further comprise a touch detection unit 113 electrically coupled to (at least some of) the plurality of piezoelectric sensors 102, and the capacitive sensing unit 105.

The touch detection unit 113 may comprise any electrical/electronic circuit configured to implement the functionality disclosed herein. The touch detection unit 113 does not need to be implemented as a separate unit/module/device. Rather, the touch detection unit 113 may refer to any section of the device 100 that is configured to implement the functionality disclosed herein.

In some embodiments, the touch detection unit 113 may also be implemented as a section of the capacitive sensing unit 105, e.g., as a part of IC implementation of the capacitive sensing unit 105, or on the same PCB with the capacitive sensing unit 105, as a part of combined detection unit.

The touch detection unit 113 may be configured to obtain piezoelectric signals from at least some of the piezoelectric sensors 102. The piezoelectric signals may comprise, for example, an electrical voltage or current. The touch detection unit 113 may be configured to obtain the piezoelectric signals, for example, substantially continuously or as discrete samples.

The touch detection unit 113 may be further configured to, in response to at least one piezoelectric signal fulfilling a preconfigured condition, provide a wakeup signal. Herein, a wakeup signal may refer to any signal that is capable of waking up another device/module/component from a standby mode. According to an embodiment, the preconfigured condition comprises at least one preconfigured threshold value for the at least one piezoelectric signal or for a combination of the piezoelectric signals.

It should be appreciated that the touch detection unit 113 may performed any operations disclosed herein substantially continuously. For example, if the touch detection unit 113 is implemented as an analogue electronic circuit, the touch detection unit 113 may perform the functionality disclosed herein substantially continuously.

According to an embodiment, the capacitive sensing unit 105 may be configured to wake up from a standby mode in response to the wakeup signal. Waking up may mean switching from standby mode to active mode.

As such, the capacitive sensing unit 105 can be activated when an object is detected by the piezoelectric sensors 102. Acquiring measurements using the capacitive sensors 102 is power consuming. The power consumption of the device can be reduced by only activating the capacitive sensing unit 105 when an object is detected by the piezoelectric sensor. The capacitive sensing unit 105 can be in standby mode more often. This can reduce idle power consumption and consequently improve battery life.

The piezoelectric sensors 102 do not require an external source of power to provide the wakeup signal. Further, the energy that the piezoelectric sensors 102 provide when a force is applied to them can be used to generate the wakeup signal. The touch detection unit 113 thus requires less power than the capacitive sensing unit 105. As such, the overall power consumption of the device 100 can be reduced.

The piezoelectric sensors 102 can detect an object quickly and reliably. As such, the capacitive sensing unit 105 can be activated quickly and reliably, thereby offering reliable and responsive touch detection and/or object tracking.

The touch detection unit 113 can thus reduce idle power consumption without (significantly) reducing the responsiveness of the device.

The touch detection unit 113 may be implemented using discrete components or as a part of an integrated circuit (IC). With an IC implementation especially, the extra hardware needed for the touch detection unit 113 may not be a significant penalty.

Piezoelectric sensors can be low cost, thereby allowing a lower cost device. Piezoelectric sensors can be thin, thereby allowing a thin device.

Capacitive sensors are sensitive to their electromagnetic environment. Anything conductive (e.g., metal, water, air) around a capacitive sensor might affect the measurements. Even the conductivity of air, in practice mostly the moisture level of air, may affect the measurements.

The design of the device (e.g., how the capacitive sensor is positioned among conductive objects inside the product) can affect the capacitive measurements.

The production of the device, such as the variation over the tolerances, e.g., how close a metal piece is to the sensor, might affect the capacitive measurements.

During runtime, dynamic environmental factors such as variations due to moving/bending metallic parts of the device, due to finger pressure, or twisting frame (e.g., laptop on the lap), can affect the capacitive measurements. Variation due to environment conditions like air moisture, different moisture levels of people's fingers, gloves, water droplets on the pad, can also affect the capacitive measurements.

Further, driving piezoelectric haptics can disturb the capacitive measurement, either because of the electromagnetic interference generated by the booster, or directly from the voltage curves driven to the piezoelectric elements during haptics.

The control unit 110 may further comprise a calibration unit 107 electrically coupled to (at least some of) the plurality of piezoelectric sensors 102, (at least some of) the plurality of capacitive sensors 104, and to the capacitive sensing unit 105.

The calibration unit 107 may be configured to calibrate the capacitive sensing unit 105. More specifically, the calibration unit 107 may be configured to calibrate the capacitive sensors 104 using piezoelectric signals from the piezoelectric sensors 102.

The piezoelectric sensors 102 are not affected by electromagnetic interferences. In particular, the piezoelectric sensors are not affected by the presence of conductive elements, nor by the conductivity changes in the air. As such, the piezoelectric signals can be used to reliably identify when an object is touching the surface. The piezoelectric signals can be further used to reliably determine whether the object is moving, steady, and/or pressing the surface.

As such, the piezoelectric signal can be used to calibrate the capacitive sensors 104. For example, when no object is detected by the piezoelectric sensors 102, a capacitive coupling measured by the capacitive sensors 104 can be assumed as baseline of capacitive coupling for the capacitive sensors 104.

The calibration unit 107 may be configured to calibrate each capacitive sensor 104 based on the associated piezoelectric sensor 102.

The calibration unit 107 may be configured to calibrate the capacitive sensors 104 at runtime.

The calibration method allows for shorter testing and calibration time. Further, there is less, or no calibration required in design and/or production. Further, thanks to calibration, wider tolerances can be accepted regarding conductive elements around the capacitive sensors.

The calibration unit 107 may comprise any electrical/electronic circuit configured to implement the functionality disclosed herein. The calibration unit 107 does no need to be implemented as a separate unit/module/device. Rather, the calibration unit 107 may refer to any section of the device 100 that is configured to implement the functionality disclosed herein.

In some embodiments, the calibration unit 107 may also be implemented as a section of the capacitive sensing unit 105, e.g., as a part of IC implementation of the capacitive sensing unit 105, or on the same PCB with the capacitive sensing unit 105, e.g., as a part of combined calibration and detection device.

The calibration unit 107 may be configured to obtain piezoelectric signals from at least one piezoelectric sensor in the plurality of piezoelectric sensors 102. The piezoelectric signal may comprise, for example, an electrical voltage or current. The calibration unit 107 may be configured to obtain the piezoelectric signals, for example, substantially continuously or as discrete samples.

The calibration unit 107 may be configured to acquire capacitive coupling measurements from at least one capacitive sensor in the plurality of capacitive sensors 104. The calibration unit 107 may be configured to obtain the measurements, for example, substantially continuously or as discrete samples.

The control unit 110 may further comprise a haptic unit 111. The haptic unit 111 may comprise, for example, a boost converter circuit (or booster), a microprocessor, and other components used to interact with the plurality of piezoelectric sensors 102. The haptic unit 111 may be configured to, for example, provide haptic feedback via the plurality of piezoelectric sensors 102. The boost converter may provide a high voltage that may be needed to drive the plurality of piezoelectric sensors 102 in the case of haptic feedback.

The control unit 110 may comprise at least one processor. The at least one processor may comprise, for example, one or more of various processing devices, such as a co-processor, a microprocessor, a digital signal processor (DSP), a processing circuitry with or without an accompanying DSP, or various other processing devices including integrated circuits such as, for example, an application specific integrated circuit (ASIC), a field programmable gate array (FPGA), a microprocessor unit (MCU), a hardware accelerator, a special-purpose computer chip, or the like.

The control unit 110 may further comprise a memory. The memory may be configured to store, for example, computer programs and the like. The memory may comprise one or more volatile memory devices, one or more non-volatile memory devices, and/or a combination of one or more volatile memory devices and non-volatile memory devices. For example, the memory may be embodied as magnetic storage devices (such as hard disk drives, floppy disks, magnetic tapes, etc.), optical magnetic storage devices, and semiconductor memories (such as mask ROM, PROM (programmable ROM), EPROM (erasable PROM), flash ROM, RAM (random access memory), etc.).

When the control unit 110 is configured to implement some functionality, some component and/or components of the control unit 110, such as the at least one processor and/or the memory, may be configured to implement this functionality. Furthermore, when the at least one processor is configured to implement some functionality, this functionality may be implemented using program code comprised, for example, in the memory.

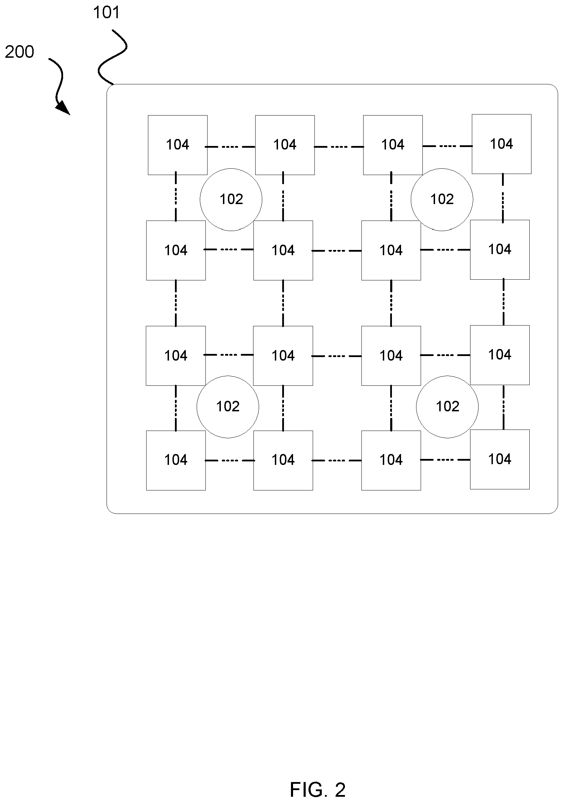

FIG. 2 illustrates a schematic plan view representation of the device according to an embodiment.

As illustrated by FIG. 2, the capacitive sensors 104 form a capacitive sensor array 200. The capacitive sensor array 200 may be a capacitance sensing matrix. The capacitive sensors 104 may be arranged in a plurality of rows and columns. Each capacitive sensor 104 may correspond to a capacitive pixel of the capacitance sensing matrix.

The capacitive sensor array 200 may be scanned to measure the capacitive couplings of at least some of the capacitive sensors 104. Scanning the capacitive sensor array 200 may comprise measuring a capacitive coupling of at least some (or all) of the capacitive sensors 104 of the capacitive sensor array 200.

Each of (at least some of) the piezoelectric sensors 102 is associated with a different section 202 of the touch surface 101. The section 202 of the touch surface associated with a piezoelectric sensor may correspond to a sensing region of the piezoelectric sensor 102. The sensing region of the piezoelectric sensor 102 may be defined as the region of the touch surface around the piezoelectric sensor in which the piezoelectric sensor is able to detect an object. The sensing region of the piezoelectric sensors 102 may overlap.

Each of (at least some of) the piezoelectric sensors 102 may be associated with a different subset 204 of the capacitive sensors 104. Each subset 204 of the capacitive sensors 104 defines a corresponding section 202 of the touch surface. The association may be determined based on a location of the capacitive sensors 104 in relation to the piezoelectric sensors 102. The capacitive sensors 104 in a sensing region of a piezoelectric sensor 102 may be associated with the piezoelectric sensors 102. The sensing region of the piezoelectric sensors 102 may overlap. As such, some capacitive sensors 104 may be associated with more than one piezoelectric sensor 102.

The control unit 110 may be configured with the association between the piezoelectric sensors 102 and the sections 202 of the touch surface and/or the subsets 204 of the capacitive sensors 104.

It should be appreciated that even though, in the embodiments disclosed herein, the plurality of piezoelectric sensors 102 and/or the plurality of capacitive sensors 104 may be illustrated only for a limited number of piezoelectric sensors and/or of capacitive sensors 104. The plurality of piezoelectric sensors 102 and/or the plurality of capacitive sensors 104 may comprise any number of piezoelectric sensors and/or capacitive sensors 104.

Although some embodiment disclosed herein may illustrate the plurality of piezoelectric sensors 102 in a matrix/array formation, these embodiments are only exemplary. The plurality of piezoelectric sensors 102 may be geometrically arranged in any pattern. For example, if the plurality of piezoelectric sensors 102 are used for a keyboard, each piezoelectric sensor may correspond to a key of the keyboard.

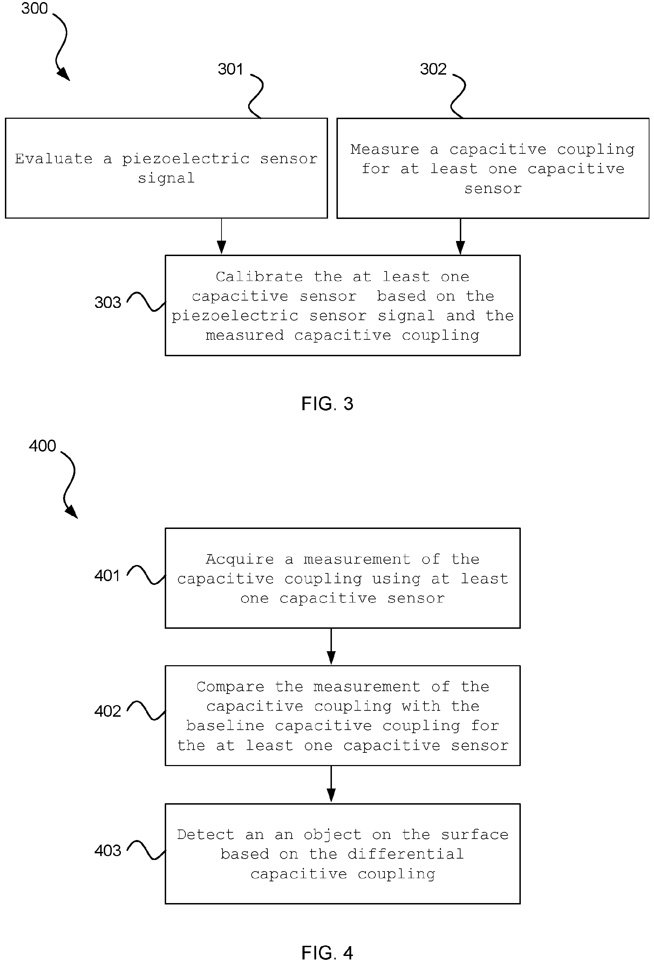

FIG. 3 illustrates a flow chart representation of a method 300 for calibrating at least one capacitive sensor 104 according to an embodiment. The method 300 may be performed by, for example, calibration unit 107.

At operation 301, calibration unit 107 evaluates a piezoelectric signal from at least one piezoelectric sensor. In particular, calibration unit 107 may receive a piezoelectric signal from at least one piezoelectric sensor 102 (hereafter called emitting piezoelectric sensor) of the plurality of piezoelectric sensors 102. Evaluating the piezoelectric signal may also comprise determining that no (e.g., detectable) piezoelectric signal is received.

At operation 302, calibration unit 107 measures a capacitive coupling for at least one capacitive sensor 104. The calibration unit 107 may scan at least part of the touch surface 101 using the capacitive sensor array 200. More specifically, capacitive sensing unit 105 may measure a capacitive coupling for one or more of the capacitive sensors 104 associated with one or more piezoelectric sensors 102.

Operation 301 and operation 302 may overlap at least partially in time. Operation 301 and operation 302 may be triggered in relation to each other. Operation 301 and operation 302 may be triggered simultaneously. Operation 301 may be triggered by operation 302. Operation 302 may be triggered by operation 301.

At operation 303, calibration unit 107 calibrates the at least one capacitive sensor 104 based on the piezoelectric signal and the measured capacitive coupling.

In particular, in response to determining that the piezoelectric signal is below a detection threshold, calibration unit 107 may consider the capacitive coupling measured for the at least one capacitive sensor 104 as the baseline capacitive coupling for the at least one capacitive sensor 104. Determining that the piezoelectric signal is below a detection threshold may include not detecting any piezoelectric signal. The calibration unit 107 may wait for the measurement to be stationary before considering the measurement as the baseline capacitive coupling.

The piezoelectric signals are not affected by electromagnetic interferences. As such, the piezoelectric signals can be used to reliably identify when no object is touching the surface. When no object is detected by the piezoelectric sensors, the measured capacitive coupling can be assumed as baseline of capacitive coupling for the capacitive sensor.

The calibration of the capacitive sensor 104 (e.g., method 300) may be triggered by the expiration of a timer or by an event. For example, the calibration of the capacitive sensor 104 may be performed periodically.

During operations 301 and 302, the haptic unit 111 may apply a driving voltage to at least one piezoelectric sensor 102, such that the piezoelectric sensor 102 provides a haptic effect to the first side of the surface based on the driving voltage.

Driving the piezoelectric haptics may disturb the capacitive measurements of the capacitive sensors 104, either with electromagnetic interferences generated by the booster, or directly by the voltage curves driving the piezoelectric sensors during haptics.

The calibration unit 107 may measure the capacitive coupling for the capacitive sensor 104 while the driving voltage is applied to the piezoelectric sensor. The calibration unit 107 may determine the baseline capacitive coupling for the capacitive sensor 104 based on the capacitive coupling measured by the capacitive sensor 104 while the driving voltage is applied to the piezoelectric sensor.

As such, the baseline capacitive takes into consideration the effect of the haptics. The capacitive sensing unit 105 can thus compensate for the effect of the haptics when detecting or tracking an object using the capacitive sensors.

FIG. 4 illustrates a flow chart representation of a method 400 for detecting an object on the surface according to an embodiment. The method 400 may be performed by, for example, the capacitive sensing unit 105.

At operation 401, the capacitive sensing unit 105 acquires a measurement of the capacitive coupling using at least one capacitive sensor 104.

At operation 402, the capacitive sensing unit 105 compares the measurement of the capacitive coupling with a baseline capacitive coupling for the at least one capacitive sensor 104. The baseline capacitive coupling may be determined during calibration (e.g., method 300).

The capacitive sensing unit 105 may determine a differential capacitive coupling for the at least one capacitive sensor 104. The differential capacitive coupling may be the difference between the measurement of the capacitive coupling and the baseline capacitive coupling.

At operation 403, the capacitive sensing unit 105 may detect an object on the surface based on the differential capacitive coupling. In particular, if the differential capacitive coupling is above a threshold, the capacitive sensing unit 105 may determine that a touch is detected.

The capacitive sensing unit 105 may determine a position of an object on the surface based on the differential capacitive coupling for the at least one capacitive sensor 104 and the position of the at least one capacitive sensor 104 on the surface.

In particular, if the differential capacitive coupling for the at least one capacitive sensor 104 is above a detection threshold, the capacitive sensing unit 105 may determine that a touch location (e.g., location of the object) includes the sensing region of the at least one capacitive sensor 104.

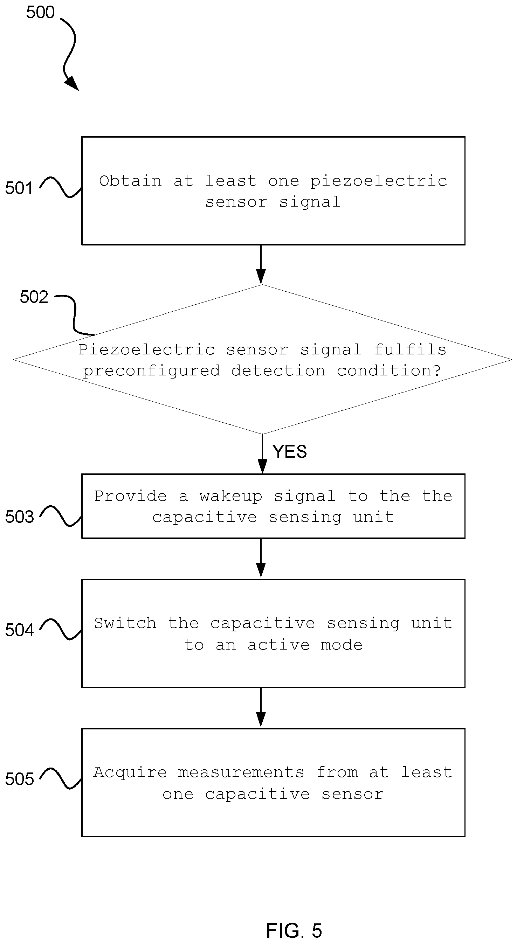

FIG. 5 illustrates a flow chart representation of a method 500 for activating the capacitive sensing unit 105 according to an embodiment. The method 500 may be performed by, for example, the touch detection unit 113.

At operation 501, the touch detection unit 113 obtains at least one piezoelectric signal from at least one piezoelectric sensor 102.

At operation 503, in response to determining 502 that the at least one piezoelectric signal fulfils a preconfigured detection condition, the touch detection unit 113 provides a wakeup signal to the capacitive sensing unit 105.

The preconfigured detection condition may comprise that a vibration component of the at least one piezoelectric signal is above a vibration component threshold.

The vibrational component may correspond to, for example, a vibrational motion, force, or pressure induced by the object 106 to the surface 101 and/or to the piezoelectric sensors 102. For example, a human finger may tend to slightly vibrate when pressed against a surface. Such a vibration may also exist with no or minimal applied pressure by the object. This may make it possible to implement the vibration-based positioning also with a light touch, starting even when the outer layer of the skin or the fabric of a glove barely makes contact with the surface 101. Moreover, the frequency of the vibration may be different from the frequencies of typical noise components. This may make it easier to filter out unwanted noise and detect touch reliably.

The touch detection unit 113 may determine the vibration component of the at least one received piezoelectric signal, e.g., by filtering the received piezoelectric signal in a frequency range, e.g., 5 - 25 hertz. A frequency of the vibrational component is typically in the range of 5 - 25 hertz. This frequency range may correspond to a vibrational frequency as a human finger touches a surface. Thus, the device may be able to, for example, efficiently determine the position of a human finger on the surface.

The vibrational component may be used to detect whether the object 106 is used by a human. If the object 104 is not used by a human, the vibrational component may be substantially zero, while the object 106 may still apply a force to the surface 101 and therefore the impulse component may be non-zero. Even if the user uses a stylus or some other object to touch the surface 101, the vibrations from the user's hand may still be detected in the vibrational component. This may be used to ignore touches that are not intended by the user.

At operation 504, the capacitive sensing unit 105 switches to an active mode in response to receiving the wakeup signal (e.g., while being in a standby mode).

At operation 505, the capacitive sensing unit, in the active mode, acquires measurements from at least one capacitive sensor 104. The capacitive sensing unit 105 may detect and/or locate an object 106 on the touch surface 101 based on the acquired measurements (e.g., according to method 400).

The acquisition of measurements from the capacitive sensor(s) (e.g., according to operation 401) is triggered by the reception of a piezoelectric signal. As such, capacitive coupling is only measured when an object is detected by the piezoelectric sensor. Acquiring measurements using the capacitive sensor array 200 is power consuming. The power consumption of the device can be reduced by only acquiring measurements with the capacitive sensor array 200, when an object is detected by the piezoelectric sensors 102.

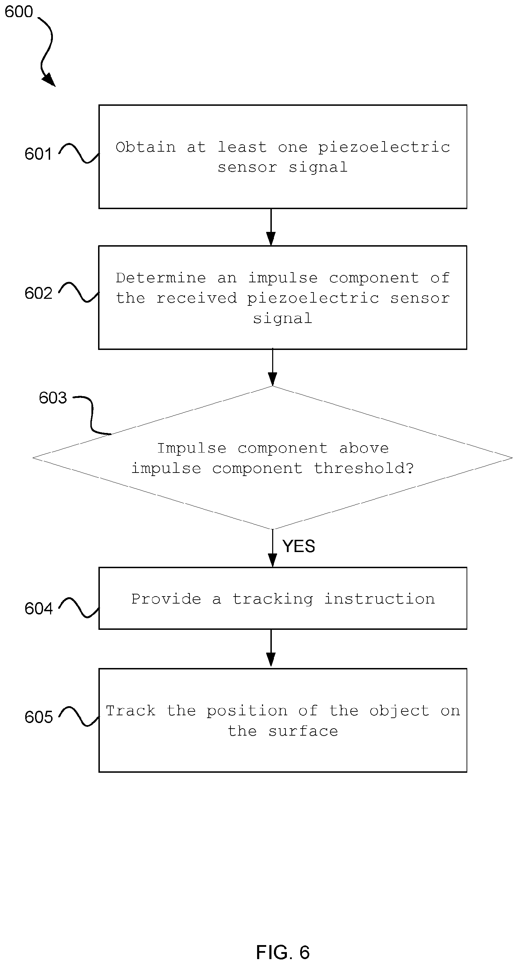

FIG. 6 illustrates a flow chart representation of a method 600 for activating object tracking according to an embodiment. The method 500 may be performed by, for example, the impulse detection unit 115.

At operation 601, the impulse detection unit 115 obtains at least one piezoelectric signal from at least one piezoelectric sensor 102.

At operation 602, the impulse detection unit 115 determines an impulse component of the received piezoelectric signal. The impulse detection unit 115 may determine the impulse component by summing samples of the obtained piezoelectric signal over time.

At operation 603, the impulse detection unit 115 determines that the impulse component of the received piezoelectric signal is above an impulse component threshold.

At operation 604, the impulse detection unit 115 provides a tracking instruction to the capacitive sensing unit 105.

At operation 605, the capacitive sensing unit 105, in response to receiving the tracking instruction, tracks the position of the object on the surface using the at least one capacitive sensor.

The capacitive sensing unit 105 may record the measurements for the capacitive coupling (or the corresponding differential capacitive coupling) for at least some of the capacitive sensors 104.

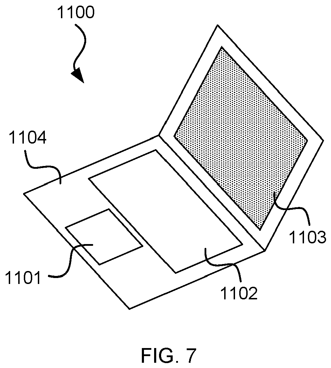

FIG. 7 illustrates a schematic representation of a laptop computer 1100 according to an embodiment.

The laptop computer 1100 may comprise a trackpad 1101. The trackpad 1101 may also be referred to as a touchpad or similar. The laptop computer 1100 may further comprise a keyboard 1102, a screen 1103, and a chassis 1104. The laptop computer 1100 may further comprise various other components not depicted in the embodiment of FIG. 7.

Although some embodiments may be disclosed herein using a laptop computer as an example, these embodiments apply in a similar fashion to any other electronic computing device, such as a smart phone, a tablet, or similar.

The laptop computer 1100 may comprise the device 100. For example, the touch surface 101 of the device 100 may correspond to the top surface of the trackpad 1101. Thus, a user may operate the laptop computer 1100 using the trackpad 1101.

Any range or device value given herein may be extended or altered without losing the effect sought. Also any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps of the methods described herein may be carried out in any suitable order, or simultaneously where appropriate. Additionally, individual blocks may be deleted from any of the methods without departing from the spirit and scope of the subject matter described herein. Aspects of any of the embodiments described above may be combined with aspects of any of the other embodiments described to form further embodiments without losing the effect sought.

The term 'comprising' is used herein to mean including the method, blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the spirit or scope of this specification.

## Claims

1. A device (100), comprising:
a touch surface (101);
at least one capacitive sensor (104) capacitively coupled to the touch surface (101);
at least one piezoelectric sensor (102) mechanically coupled to the touch surface (101), the piezoelectric sensor being configured to convert a force applied to the piezoelectric sensor via the touch surface (101) into a piezoelectric signal; and
a calibration unit (107) electrically coupled to the at least one piezoelectric sensor (102) and to the at least one capacitive sensor (104), wherein the calibration unit (107) is configured to:
evaluate (301) the piezoelectric signal;
measure (302) a capacitive coupling using the at least one capacitive sensor (104); and
calibrate (303) the at least one capacitive sensor (104) based on the piezoelectric signal and the measured capacitive coupling.

2. The device (100) according to the preceding claim, wherein the calibration unit (107) is configured to:
in response to determining that the piezoelectric signal is below a detection threshold, determining a baseline capacitive coupling for the at least one capacitive sensor (104) based on the measured capacitive coupling.

3. The device (100) according to claim 2, wherein the device comprises a capacitive sensing unit (105) electrically coupled to the at least one capacitive sensor (104), wherein the capacitive sensing unit (105) is configured to:
acquire a measurement of the capacitive coupling using the at least one capacitive sensor (104); and
compare the measurement of the capacitive coupling with the baseline capacitive coupling for the at least one capacitive sensor (104).

4. The device (100) according to claim 3, wherein the capacitive sensing unit (105) is configured to:
determine a differential capacitive coupling for the at least one capacitive sensor (104), wherein the differential capacitive coupling is based on a difference between the acquired measurement of the capacitive coupling and the baseline capacitive coupling; and
detect an object on the surface based on the differential capacitive coupling for the at least one capacitive sensor (104).

5. The device according to any of claims 2 to 4, wherein the device further comprises a haptic unit (111) configured to:
apply a driving voltage to the at least one piezoelectric sensor (102);
wherein the at least one piezoelectric sensor (102) is further configured to provide a haptic effect to the first side of the surface based on the driving voltage;
wherein the calibration unit (107) is configured to:
measure the capacitive coupling for the at least one capacitive sensor (104) while the driving voltage is applied to the at least one piezoelectric sensor (102); and
determining the baseline capacitive coupling for the at least one capacitive sensor (104) based on the capacitive coupling measured for the at least one capacitive sensor (104) while the driving voltage is applied to the at least one piezoelectric sensor (102).

6. The device (100) according to any of claims 3 to 5, wherein the device further comprises a touch detection unit (113) configured to:
obtain at least one piezoelectric signal from the at least one piezoelectric sensor (102);
in response to determining that the at least one piezoelectric signal fulfils a preconfigured detection condition, providing a wakeup signal to the capacitive sensing unit (105);
and wherein the capacitive sensing unit (105) is configured to:
in response to receiving the wakeup signal while being in a standby mode, switch to an active mode; and
when in the active mode, acquire the measurements from the at least one capacitive sensor (104).

7. The device (100) according to claim 6, wherein the touch detection unit (113) is configured to:
determine a vibration component of the at least one piezoelectric signal;
in response to determining that the vibration component of the piezoelectric signal is above a vibration component threshold, determine that the at least one piezoelectric signal fulfils the preconfigured condition.

8. The device according to claim 7, wherein the touch detection unit (113) is further configured to determine the vibrational component by filtering the received piezoelectric signal in a predefined frequency range.

9. The device (100) according to any of claims 6 to 8, wherein wherein the device further comprises an impulse detection unit (115) configured to:
obtain the piezoelectric signal from the at least one piezoelectric sensor (102);
determine an impulse component of the piezoelectric signal; and
in response to determining that the impulse component of the piezoelectric signal is above an impulse component threshold, providing a tracking instruction to the capacitive sensing unit (105);
and wherein the capacitive sensing unit (105) is configured to:
in response to receiving the tracking instruction, track the position of the object on the surface using the at least one capacitive sensor (104).

10. The device according to claim 9, wherein the impulse detection unit (115) is further configured to determine the impulse component by summing samples of the piezoelectric signal over time.

11. A method comprising:
evaluating (301) a piezoelectric signal from at least one piezoelectric sensor (102) mechanically coupled to a touch surface (101), the piezoelectric sensor being configured to convert a force applied to the piezoelectric sensor via the touch surface (101) into the piezoelectric signal;
measuring (302) a capacitive coupling using at least one capacitive sensor (104) capacitively coupled to the touch surface (101); and
calibrating (303) the at least one capacitive sensor (104) based on the piezoelectric signal and the measured capacitive coupling.

12. The method according to the preceding claim, the method further comprising:
in response to determining that the piezoelectric signal is below a detection threshold, determining a baseline capacitive coupling for the at least one capacitive sensor (104) based on the measured capacitive coupling.

13. The method according to the preceding claim, the method further comprising:
acquire a measurement of the capacitive coupling using the at least one capacitive sensor (104); and
compare the measurement of the capacitive coupling with the baseline capacitive coupling for the at least one capacitive sensor (104).

14. The method according to the preceding claim, the method further comprising:
determine a differential capacitive coupling for the at least one capacitive sensor (104), wherein the differential capacitive coupling is based on a difference between the acquired measurement of the capacitive coupling and the baseline capacitive coupling; and
detect an object on the surface based on the differential capacitive coupling for the at least one capacitive sensor (104).

15. A computer program product comprising program code configured to perform the method according to any of claims 11 to 14 when the computer program is executed on a computing device.
